# FASCICULE DE BREVET EUROPEEN

(11) **EP 0 634 624 B1**
(45) Date de publication et mention de la délivrance du brevet: **14.01.1998**
(21) Numéro de dépôt: 94401624.5
(22) Date de dépôt: 13.07.1994
(51) Int. Cl.: G01B 3/18, G01B 3/00

(54) **Outil pour mesurer une force de serrage exercée par une tige mobile d'appareil de mesure de longueur**
Gerät zum Messen einer Klemmkraft, die durch eine bewegbare Stange einer Längenmessvorrichtung ausgeübt wird
Device for measuring a clamping force applied by a movable rod of a length measuring device

(30) Priorité: 15.07.1993 FR 9308663
(43) Date de publication de la demande: 18.01.1995
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Mazenet, Daniel, F-77590 Bois le Roi (FR)

(56) Documents cités:
- CH-A- 237 422
- CH-A- 277 356
- US-A- 1 625 767
- US-A- 2 690 016

## Description

L'invention a trait à un outil pour mesurer une force de serrage mesurée par une tige mobile d'appareil de mesure de longueur.

Les appareils de mesure de longueur de précision appelés couramment micromètres sont essentiellement composés d'un corps, d'une tige sortant du corps et mobile axialement par rapport à lui, d'une touche fixée au corps dans le prolongement de la tige, d'un organe de motion de la tige généralement formé par un écrou à surface de préhension moletée et d'un limiteur d'effort intercalé entre la tige et l'organe de motion.

Dans le cas d'un micromètre extérieur, la pièce dont il faut mesurer la longueur est disposée entre les extrémités libres de la tige et de la touche, et une action sur l'organe de motion rapproche la tige de la touche jusqu'à ce que l'objet soit serré. Le limiteur d'effort interrompt l'action de l'organe de motion dès que la force d'arrêt est atteinte.

La connaissance précise de cette force présente une grande importance, et la norme française E11-095 la spécifie en principe comprise entre les valeurs de 5 et 20 newtons. De plus, la variation de cette force sur toute l'étendue de la mesure ne doit pas excéder 2,5 newtons en plus ou en moins.

Si la force d'arrêt est trop faible, le serrage de la pièce n'est plus assuré et il devient difficile de mesurer dans des circonstances satisfaisantes ; si elle est excessive, des déformations mécaniques sont produites qui se traduisent par des erreurs de mesure.

Il est nécessaire dans ces conditions de mesurer de temps à autre la force de serrage exercée par la tige mobile pour vérifier que l'appareil est conforme à la norme, mais aucun outil simple n'existe pour cela à la connaissance de l'inventeur. On connait par le brevet US-1 625 767 une pièce de contrôle en forme de U conçue pour s'adapter sur l'extrémité de la tige mobile d'un micromètre et permettant de repousser ladite tige mobile pour amener un indicateur sur le point zéro, la pièce de contrôle arrivant alors au contact du support de ladite tige mobile. Une telle pièce de contrôle permet d'étalonner le micromètre mais ne résoud pas le problème posé. On connaît aussi par le brevet CH 277356 un micromètre dont la touche fixe est remplacée par un comparateur monté coulissant sur le corps de l'appareil et immobilisé par des vis après réglage. A une déviation de l'aiguille repérée par un index correspond une pression de mesure préétablie. On comprend que ce comparateur ne permet pas de contrôler le limiteur de couple du micromètre, mais se substituer à lui pour permettre de manière interactive, à l'opérateur d'effectuer la mesure de longueur avec une force d'appui préétablie. Un tel comparateur ne résoud en conséquence pas le problème posé. Cette lacune est comblée par l'invention, qui concerne, sous sa forme la plus générale, un outil pour mesurer une force de serrage exercée par une tige mobile sortant d'un corps d'un appareil de mesure de longueur entre une extrémité libre de la tige et une extrémité libre d'une touche fixée au corps d'appareil, l'appareil comprenant un organe de motion de la tige par l'intermédiaire d'un limiteur d'effort, caractérisé en ce qu'il est composé d'un boîtier comprenant un bord constitué pour être posé sur une surface du corps d'appareil entourant la tige, d'un capteur de force situé dans un fond du boîtier et d'un moyen de lecture d'une force subie par le capteur.

Le capteur est avantageusement constitué par une membrane élastique sur laquelle des jauges d'extensométrie sont collées. Le boîtier est quant à lui avantageusement constitué, outre du fond, d'une paroi détachable du fond ; cette paroi peut d'ailleurs être constituée d'un empilement d'anneaux séparables et dont les extrémités sont alors normalement munies de moyens d'assemblage à d'autres anneaux.

Ces anneaux ont une fonction de cale d'épaisseur et permettent de mesurer la force de serrage exercée par la tige mobile à différentes positions de cette tige.

La présente invention ne saurait être confondue avec la pièce de contrôle du brevet US-1 625 767. En effet, l'invention est différente dans ses moyens et dans sa fonction, et elle résoud un problème différent.

On va maintenant décrire l'invention plus en détail à l'aide des figures suivantes annexées à titre illustratif et non limitatif :
- la figure 1 représente une réalisation de l'invention en position d'emploi ;
- la figure 2 représente une autre réalisation de l'invention ;
- et la figure 3 représente une variante possible pour un élément de la figure 2.

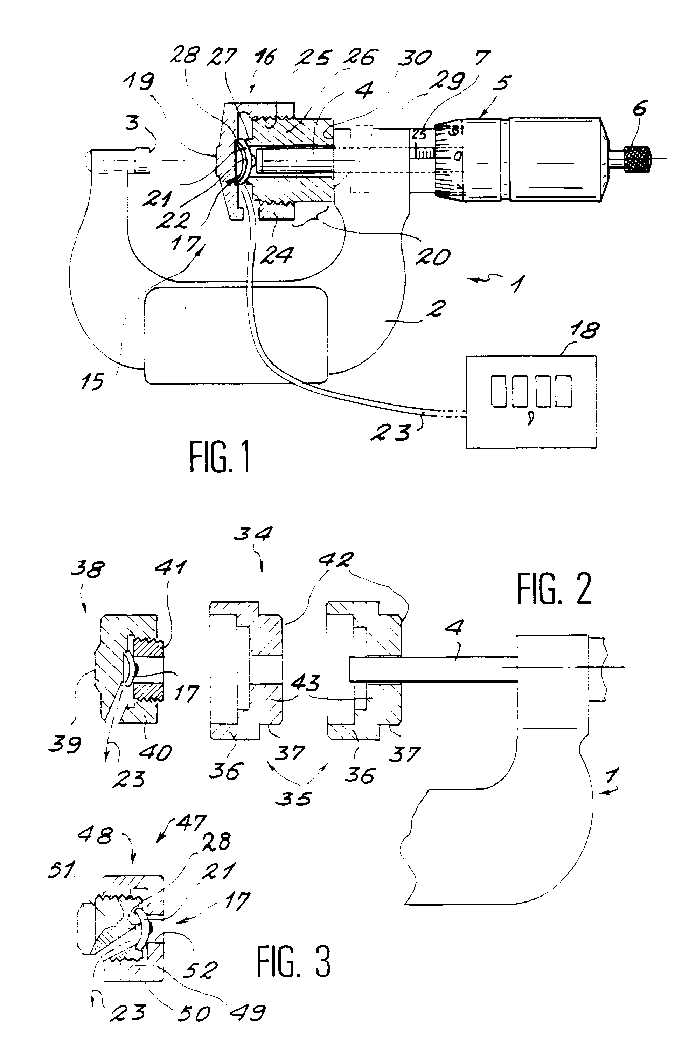

On a représenté à la figure 1 un micromètre 1. La constitution de cet appareil classique est bien connue. Il comporte en particulier un corps en forme d'arceau 2, une touche fixe 3 à une extrémité de l'arceau 2, une tige mobile 4 à son autre extrémité, et un organe de motion 5 destiné à faire coulisser la tige mobile 4 en la faisant sortir plus ou moins de son logement de l'arceau 2 ; la touche fixe 3 est dans le prolongement de la tige mobile 4 : l'objet dont il faut mesurer la longueur sera donc placé et serré entre elles. L'organe de motion 5 comprend en particulier un bouton moleté 6. La tige mobile 4 est prolongée dans son axe par une vis de précision se vissant dans une colonne 7 qui est solidaire du corps 2 du micromètre 1. Le bouton moleté 6 entraîne cette vis par l'intermédiaire d'un limiteur de couple. Lorsque l'on fait tourner le bouton moleté 6, le mouvement de rotation se transmet par l'intermédiaire du limiteur de couple à la vis de précision, provoquant ainsi la translation à l'intérieur de la colonne 7 de la vis de précision et de la tige mobile 4 qui lui est solidaire. Lorsque la tige mobile 4 arrive au contact de la pièce à mesurer, la force d'appui exercée par le micromètre sur la pièce à mesurer augmente, ainsi que le couple nécessaire à la rotation de la vis. Lorsque le couple dépasse une certaine valeur, le limiteur de couple patine et la rotation du bouton moleté 6 n'entraîne plus la vis. La force de serrage exercée par le micromètre 1 sur la pièce à mesurer se stabilise, évitant ainsi la déformation de cette pièce ou de l'arceau 2 du micromètre 1. C'est cette force de serrage qu'il s'agit de mesurer.

L'outil de l'invention porte la référence générale 15 et se compose d'un boîtier 16 constituant une enceinte ouverte, d'un capteur de force 17 et d'un dispositif de lecture 18. Le boîtier 16 est lui-même composé d'un fond 19 plat et d'une paroi 20 circulaire. Le capteur de force 17 est formé sous sa forme la plus simple d'une membrane bombée 21 élastique et porteuse de jauges d'extensométrie 22 qui sont collées à sa face interne. De tels capteurs de force ou de pression sont abondamment décrits ailleurs (ainsi dans le brevet français 2 619 446) et ne justifient pas d'être détaillés plus avant ici. Des fils 23 relient les jauges d'extensométrie 22 au dispositif de lecture 18, qui comprend de manière classique un pont de Wheatstone pour mesurer les déformations des jauges d'extensométrie 22 par la variation de leurs résistances et un voltmètre branché à une borne du pont et dont les informations sont converties en données numériques. Dans la réalisation représentée ici, la paroi 20 peut être décomposée en une douille 24 solidaire du fond 19 et taraudée sur sa face interne 25, et en un manchon 26, cylindre creux muni d'un filet sur sa surface extérieure et qui est ainsi engagé dans la douille 24. Ce manchon 26 est terminé par un collet 27 sur sa surface plane d'extrémité engagée dans la douille 24. Le collet 27 touche le bord de la membrane bombée 21 et le presse contre le fond 19 ; comme la membrane bombée 21 est logée dans une dépression 28 du fond 19, de faible profondeur et de diamètre guère plus important que celui de la membrane bombée 21, cette dernière est donc fermement maintenue dans le boîtier 16 pour une meilleure fidélité de la mesure.

Le manchon 26 possède un bord extérieur 29 plat et qui peut être posé contre une surface plane 30 de l'arceau 2 qui entoure l'endroit d'où la tige mobile 4 sort.

Le procédé de mesure consiste à poser le bord extérieur 29 sur la surface plane 30, et tout en gardant ce contact entre le boîtier 16 et l'arceau 2 en les serrant l'un contre l'autre d'une main, à faire sortir de l'autre main la tige mobile 4 jusqu'à ce qu'elle touche le capteur de force 17. Le dispositif 18 mesure alors la force subie par le capteur de force 17 quand la tige mobile 4 le touche, et notamment le palier que cette force atteint quand le limiteur de couple a fonctionné.

Le manchon 26 dépasse de la douille 24 et sa longueur peut être choisie selon la position de la tige mobile 4 pour laquelle on désire mesurer la force d'arrêt. Il est concevable de remplacer le manchon 26 par un autre de longueur différente ou de l'allonger par un écrou engagé sur une partie apparente éventuelle de son filetage.

La réalisation de la figure 2 se prête également à un ajustement de longueur de l'outil 34, ici par un empilement d'anneaux 35 dont chacun porte à une extrémité une collerette 36 qui s'emboîte autour de la circonférence 37 de l'anneau 35 adjacent ou d'un boîtier 38 logeant le même capteur de force 17 que dans la réalisation précédente. Le boîtier 38 comprend un fond 39 plat, une douille 40 taraudée et solidaire du fond 39, et un manchon 41 de serrage du capteur de force 17. Le boîtier 38 a donc une structure ressemblant à celle de l'ensemble de l'outil 15 de la réalisation précédente, mais ses pièces sont moins hautes. Dans cette réalisation, on peut estimer que l'outil est formé par le boîtier 38 et l'empilement des anneaux 35, qui prolongent le boîtier 38.

Chaque anneau 35 est terminé par un bord plat 42 de butée sur la surface plane 30 ou un autre anneau 35. Le bord plat 42 est adjacent à la circonférence 37. Il constitue une surface d'un couvercle 43 percé au centre pour le passage de la tige mobile 4. Les anneaux 35 sont représentés disjoints pour des raisons de clarté, mais il est évident qu'ils sont serrés les uns sur les autres par l'opérateur pendant la mesure d'outil 47.

La réalisation d'outil 47 de la figure 3 se distingue de la précédente en ce qu'elle est constituée par un boîtier 48 composé d'une paroi plane 49 qui se prolonge vers l'arrière par une douille 50 taraudée. Une vis de pression 51 est engagée dans la douille 50 et sert à bloquer le capteur de force 17 contre la paroi plane 49. La membrane bombée 21 apparaît derrière un évidement central 52 de la paroi plane 49, contre le bord duquel son pourtour est pressé. La dépression 28 se trouve cette fois sur la vis de pression 51, à travers laquelle les fils 23 passent au lieu de le faire à travers la douille 24 ou 40. Cette réalisation peut être complétée par des anneaux 35 en nombre quelconque, comme la précédente. Sinon, le boîtier 48 en forme de capsule, dépourvu de paroi circulaire saillante à la façon de celle, 20 ou 40, des réalisations précédentes et qui ne comprend donc que l'équivalent du fond 19 ou 38, est appuyé sur la surface plane 30 par la paroi plane 49. L'outil faisant l'objet de la présente invention ne saurait non plus être confondu avec le comparateur du micromètre divulgué par le brevet CH 277356. En effet :
- Le moyen de lecture 18 selon l'invention est un moyen de lecture de la force subie par le capteur de force 17, alors que dans le brevet CH 277356, ce moyen de lecture compare cette force à une valeur préétablie.
- Le boîtier 16 de l'invention constitue une enceinte ouverte afin que la tige de mesure 4 puisse toucher le capteur de force 17. Dans le brevet CH 277356 au contraire, ce boîtier est fermé parle palpeur 4 guidé par le tube 6 solidaire du boîtier.

Un tel comparateur ne peut en conséquence être substitué à la présente invention pour mesurer la force d'appui des micromètres.

## Revendications

1. Outil (15, 34, 47) pour mesurer une force de serrage exercée par une tige mobile (4) sortant d'un corps (2) d'un appareil de mesure de longueur (1) entre une extrémité libre de la tige (4) et une extrémité libre d'une touche (3) fixée au corps d'appareil, l'appareil comprenant un organe de motion (5) de la tige (4) par l'intermédiaire d'un limiteur de couple, l'outil (15, 34, 47) étant composé d'un boîtier (16, 38, 48), d'un capteur de force (17) et d'un moyen de lecture (18), caractérisé en ce que le boîtier (16, 38, 48) constitue une enceinte ouverte et comprend un bord (29) constitué pour être posé sur la surface (30) du corps d'appareil (2) entourant la tige (4), en ce que le capteur de force (17) est situé à un fond (19, 39, 48) du boîtier et en ce que le moyen de lecture (18) est un moyen de lecture de la force subie par le capteur de force (17).

2. Outil suivant la revendication 1, caractérisé en ce que le capteur est constitué par une membrane élastique (21) sur laquelle des jauges d'extensométrie (22) sont collées.

3. Outil suivant l'une quelconque des revendications 1 ou 2, caractérisé en ce que le boîtier comprend une paroi circulaire (20, 40) autour du capteur (17) et s'élevant sur le fond (19, 39).

4. Outil suivant l'une quelconque des revendications 1 à 3, caractérisé en ce que la paroi circulaire est composée d'une douille (24, 40) solidaire du fond (19, 39) et d'un manchon (26, 41) vissé sur la douille (24, 40) et retenant le capteur (17).

5. Outil suivant l'une quelconque des revendications 1 ou 2, caractérisé en ce que le boîtier comprend une paroi plane (49) derrière laquelle le capteur (17) est logé, un évidement (52) étant disposé sur la paroi plane (49) pour laisser le capteur (17) apparent, une vis (51) engagée dans une douille (50) solidaire de la paroi plane (49) repoussant le capteur (17) vers la paroi plane (49).

6. Outil suivant la revendication 4 ou 5, caractérisé en ce que le boîtier est prolongé par un empilement d'anneaux (35) séparables.

7. Outil suivant la revendication 6, caractérisé en ce que les anneaux ont des extrémités munies de moyens d'assemblage (36, 37) à d'autres anneaux.

8. Outil suivant la revendication 7, caractérisé en ce que les moyens d'assemblage consistent en des emboîtures.

## Patentansprüche

1. Vorrichtung (15, 34, 47) zum Messen einer Klemmkraft, die von einer aus dem Körper (2) eines Längenmeßgeräts (1) heraustretenden bewegbaren Stange (4) zwischen einem freien Ende der Stange (4) und einem freien Ende eines an dem Gerätekörper befestigten Anschlags (3) ausgeübt wird, wobei das Längenmeßgerät ein Organ (5) aufweist, mit dem die Stange (4) über einen Momentbegrenzer bewegbar ist und wobei die Vorrichtung (15, 34, 47) aus einem Gehäuse (16, 38, 48), einem Kraftmeßfühler (17) und einer Leseeinrichtung (18) besteht,
**dadurch gekennzeichnet,**
daß das Gehäuse (16, 38, 48) einen offenen Behälter bildet und einen Rand (29) aufweist, der so ausgebildet ist, daß er auf die die Stange (4) umgebende Oberfläche (30) des Gerätekörpers (2) aufsetzbar ist,
daß der Kraftmeßfühler (17) sich auf einem Boden (19, 39, 48) des Gehäuses befindet
und daß die Leseeinrichtung (18) eine Leseeinrichtung zum Ablesen der von dem Kraftmeßfühler (17) aufgenommenen Kraft ist.

2. Vorrichtung nach Anspruch 1, dadurch gekennzeichnet, daß der Meßfühler aus einer elastischen Membran (21) besteht, auf die Dehnungsmeßstreifen (22) aufgeklebt sind.

3. Vorrichtung nach einem der Ansprüche 1 oder 2, dadurch gekennzeichnet, daß das Gehäuse eine kreisrunde Wand (20, 40) besitzt, die um den Meßfühler (17) verläuft und sich über den Boden (19, 39) erhebt.

4. Vorrichtung nach einem der Ansprüche 1 bis 3, dadurch gekennzeichnet, daß die kreisrunde Wand aus einer mit dem Boden (19, 39) fest verbundenen Buchse (24, 40) und einer Spannhülse (26, 41) besteht, die auf die Buchse (24, 40) geschraubt ist und den Meßfühler (17) festhält.

5. Vorrichtung nach einem der Ansprüche 1 oder 2, dadurch gekennzeichnet, daß das Gehäuse eine ebene Wand (49) aufweist, hinter der sich der Meßfühler (17) befindet, wobei in der ebenen Wand (49) eine Offnung (52) angebracht ist, durch die der Meßfühler (17) sichtbar ist, und daß das Gehäuse ferner eine Schraube (51) aufweist, die in eine mit der ebenen Wand (49) fest verbundene Buchse (50) eingreift und den Meßfühler (17) gegen die ebene Wand (49) drückt.

6. Vorrichtung nach Anspruch 4 oder 5, dadurch gekennzeichnet, daß das Gehäuse von einem Stapel aus trennbaren Ringen (35) verlängert wird.

7. Vorrichtung nach Anspruch 6, dadurch gekennzeichnet, daß die Endbereiche der Ringe Mittel (36, 37) aufweisen, die das Zusammensetzen mit anderen Ringen ermöglichen.

8. Vorrichtung nach Anspruch 7, dadurch gekennzeichnet, daß die Mittel zum Zusammensetzen aus Paßverbänden bestehen.

## Claims

1. A tool (15, 34, 47) for measuring a clamping force applied by a movable rod (4) extending from a body (2) of a linear measurement device (1) between a free end of the rod (4) and a free end of an end stop (3) secured to the body (2), the device comprising a member (5) for moving the rod (4) by way of a torque limiter, the tool (15, 34, 47) being composed of a casing (16, 38, 48), a force sensor (17) and read-out means (18), characterised in that the casing (16, 38, 48) is in the form of an open enclosure and comprises an edge (29) adapted to be placed on that surface (30) of the body (2) which extends around the rod (4), in that the force sensor (17) is disposed on an end member (19, 39, 48) of the casing and in that the read-out means (18) is a means of displaying the force experienced by the force sensor (17).

2. A tool according to claim 1, characterised in that the sensor is in the form of a resilient diaphragm (21) to which strain gauges (22) are stuck.

3. A tool according to claim 1 or 2, characterised in that the casing comprises a circular wall (20, 40) which extends around the sensor (17) and rises from the end member (19, 39).

4. A tool according to any of claims 1 to 3, characterised in that the circular wall is composed of a socket (24, 40) rigidly secured to the end member (19, 39) and of a sleeve (26, 41) which is screwed to the socket (24, 40) and retains the sensor (17).

5. A tool according to claim 1 or 2, characterised in that the casing comprises a plane wall (49) behind which the sensor (17) is disposed and which is formed with a recess (52) to leave the sensor (17) visible, a screw (51) being engaged in a socket (50) which is rigidly secured to the plane wall (59) and urging the sensor (17) towards the plane wall (49).

6. A tool According to claim 4 or 5, characterised in that the casing is prolonged by a stack of separable rings (35).

7. A tool according to claim 6, characterised in that the rings have ends having means (36, 37) for assembly with other rings.

8. A tool according to claim 7, characterised in that the assembly means consists of nesting means.
